# EUROPÄISCHE PATENTSCHRIFT

(11) **EP 3 458 330 B1**
(45) Veröffentlichungstag und Bekanntmachung des Hinweises auf die Patenterteilung: **21.10.2020**
(21) Anmeldenummer: 17740354.0
(22) Anmeldetag: 06.07.2017
(51) Int. Cl.: B61F 19/04, B60R 21/34

(54) **PERSONENSCHUTZVORRICHTUNG**
PERSONAL PROTECTION DEVICE
DISPOSITIF DE PROTECTION DES PERSONNES

(30) Priorität: 27.07.2016 DE 102016213777
(43) Veröffentlichungstag der Anmeldung: 27.03.2019
(73) Patentinhaber: Siemens Mobility GmbH, 81739 München (DE)
(72) Erfinder: KRICKAU, Andreas, 91088 Bubenreuth (DE)
(86) Internationale Anmeldenummer: PCT/EP2017/066956
(87) Internationale Veröffentlichungsnummer: WO 2018/019540

(56) Entgegenhaltungen:
- DE-A1- 4 216 025
- GB-A- 326 013
- GB-A- 191 406 299

## Beschreibung

Die Erfindung betrifft eine Personenschutzvorrichtung für ein Fahrzeug mit einer Bugschürze vor verletzungsgefährdenden Elementen an der Frontseite des Fahrzeugs, wobei die Bugschürze die verletzungsgefährdenden Elemente freigebbar aufweist.

Personenschutzvorrichtungen dieser Art sind bekannt. Sie werden vor allem im Straßenbahnbetrieb eingesetzt und dienen dem passiven Schutz von Fußgängern im Falle einer Kollision. Die Bugschürze ist weit herunter gezogen um zu verhindern, dass am Boden liegende Personen im Falle des Überfahrens unter die Straßenbahn geraten. Berücksichtigt werden muss allerdings, dass die Bodenfreiheit bei einer Kuppen-Wannen-Fahrt der Straßenbahn nicht verletzt werden darf. Dies führt letztendlich dazu, dass je nach Streckenprofil ein Überfahren von Personen nicht ausgeschlossen werden kann, weil sich ein Spalt zwischen der Bugschürze und dem Streckenprofil ergibt.

Um dem zu begegnen, hat man diesen Spalt mit einem zusätzlichen Element, wie beispielsweise einem Airbag, verschlossen, jedoch bringt dies erhebliche Probleme mit sich; so können Fehlauslösungen, zu späte Erkennung oder Nichterkennung aufgrund einer anfälligen Sensorik auftreten. Außerdem sind diese Zusatzelemente verhältnismäßig teuer.

Außerdem bestehen bekannte Bugschürzen aus glasfaserverstärktem Kunststoff oder aus einem Aluminiumblech in einer Ausführung, bei der scharfe Kanten zugunsten von Rundungen vorgesehen sind, was zu erhöhten Herstellungskosten führt.

Hinzu kommt, dass verletzungsgefährdende Elemente an der Frontseite von Fahrzeugen, beispielsweise Kupplungen, von Hand oder automatisch klappbar ausgeführt sein müssen, damit Kupplungen im Betrieb freigebbar sind, wenn zwei Fahrzeuge miteinander verbunden werden sollen. DE4216025 A1 offenbart eine Personenschutzvorrichtung gemäß dem Oberbegriff des Patentanspruchs 1.

Der Erfindung liegt daher die Aufgabe zugrunde, für ein Fahrzeug eine Bugschürze vorzuschlagen, die sich durch einen zuverlässigen Schutz verunfallter Personen auszeichnet.

Zur Lösung dieser Aufgabe weist bei einer Personenschutzvorrichtung der eingangs angegebenen Art erfindungsgemäß die Bugschürze einen zweiteiligen, C-förmigen Rahmen mit einer aufgespannten, flexiblen Plane auf, und ein oberes Rahmenteil des zweiteiligen Rahmens ist fest und ein unteres Rahmenteil des zweiteiligen Rahmens ist in einem gegenüber der Frontseite nach hinten versetzt liegenden Bereich gelenkig mit dem oberen Rahmenteil oder mit dem Fahrzeug verbunden.

Ein wesentlicher Vorteil der erfindungsgemäßen Bugschürze wird darin gesehen, dass die Plane aufgrund ihrer Aufspannung in dem Rahmen äußerst weich ausgeführt ist, so dass diese Plane im Falle einer Kollision mit einer verunfallten Person wie ein Fangtuch wirkt und die Person sanft aufnimmt. Ein weiterer Vorteil der erfindungsgemäßen Personenschutzvorrichtung besteht darin, dass sie günstig in ihren Herstellungskosten ist.

Bei der erfindungsgemäßen Bugschürze sind das obere und das untere Rahmenteil in vorteilhafter Weise an die Kontur an der Frontseite des Fahrzeugs angepasst, um einer Verletzungsgefahr durch die Bugschürze selbst vorzubeugen. Außerdem ergibt sich dadurch eine Bauform, bei der eine verunfallte Person möglichst sanft zur Seite hin abgedrängt wird, wie es die Formgestaltung der Straßenbahn an der Frontseite auch im Übrigen ermöglicht.

Das obere und das untere Rahmenteil können bei der erfindungsgemäßen Personenschutzvorrichtung in unterschiedlicher Weise ausgeführt sein. So kann es aus Kostengründen vorteilhaft sein, wenn das obere Rahmenteil unmittelbar mit dem Frontteil des Fahrzeugs verbunden ist oder in das Frontteil des Fahrzeugs integriert ist.

Als vorteilhaft hat es sich außerdem erwiesen, wenn bei der erfindungsgemäßen Personenschutzvorrichtung zwischen dem oberen und dem unteren Rahmenteil eine federbelastete Spannvorrichtung vorhanden ist, weil dadurch ein unbeabsichtigtes Hochklappen des unteren Rahmenteils mit der aufgespannten Plane verhindert wird. Hervorzuheben ist vor allem, dass durch die federbelastete Spannvorrichtung der Rahmen mit der aufgespannten Plane tiefer als eine fest angebrachte Bugschürze herunter gezogen werden kann, weil auch bei einer extremen Wannenfahrt des Fahrzeugs und eines damit einhergehenden Aufsetzens des Rahmens ein selbsttätiges Nachgeben des Rahmens ermöglicht ist.

Die erfindungsgemäße Personenschutzvorrichtung ist auch hinsichtlich der Freigebbarkeit der verletzungsgefährdenden Elemente vorteilhaft, wenn an die untere Stützeinrichtung eine Stelleinrichtung angreift, mittels der die verletzungsgefährdenden Elemente freigebbar sind. Diese Stelleinrichtung kann aus einem Handgriff zum Hochklappen des Rahmens bestehen oder aus einem elektrischen Antrieb, um die Bugschürze einzuklappen und einen Zugang zu beispielsweise Kupplungen an der Frontseite des Fahrzeugs zu ermöglichen.

Vorteilhaft ist es bei der erfindungsgemäßen Personenschutzvorrichtung ferner, die Plane kunststofffaserverstärkt ist, um sie strapazierfest zu gestalten. Es kommen auch anderweitig verstärkte Stoffe in Frage.

Die erfindungsgemäße Personenschutzvorrichtung ist auch in einer Ausführung vorteilhaft, bei der der Rahmen von unten her mit einer Kunststoffschiene geschützt ist. Die Kunststoffschiene schützt bei einer Extremlage des Rahmens zu Straße oder Schiene den Rahmen.

Vorteilhaft lässt sich die erfindungsgemäße Personenschutzvorrichtung insbesondere bei einem Schienenfahrzeug einsetzen, indem die Bugschürze bei einem Schienenfahrzeug an der Frontseite einen unteren Bereich abdeckt, in dem sich eine Kupplung befindet. Vorteilhafte Einsatzmöglichkeiten ergeben sich darüber hinaus bei Lastkraftwagen, bei denen auch personengefährdende Elemente an der Frontseite angebracht sind.

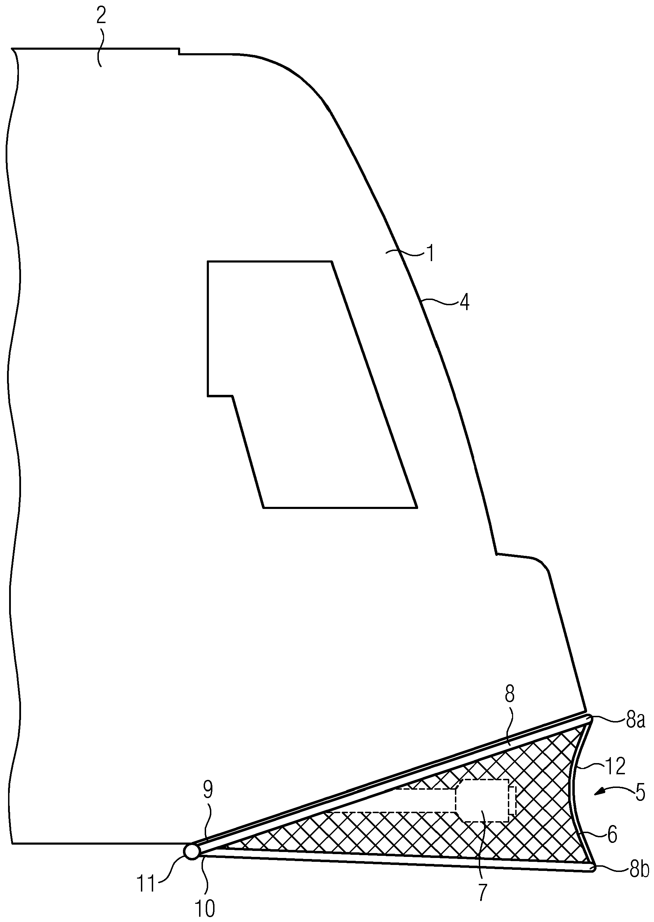

Zur weiteren Erläuterung der Erfindung ist in der Figur eine Seitenansicht auf einen Frontteil einer Straßenbahn mit einem Ausführungsbeispiel der erfindungsgemäßen Personenschutzvorrichtung schematisch gezeigt.

Die Figur zeigt einen Frontteil 1 einer Straßenbahn 2, die am Frontteil 1 eine Frontseite 4 mit Abrundungen besitzt; die Frontseite 4 weist in ihrem unteren Bereich 5 eine Bugschürze 6 auf. Die Bugschürze 6 ist vor personengefährdenden Elementen angeordnet, die im dargestellten Falle von einer Kupplung 7 gebildet ist.

Die Bugschürze 6 enthält einen zweiteiligen, C-förmigen Rahmen 8, der an seiner von der Frontseite 4 abgewendeten Seite offen ist. Der Rahmen 8 weist ein oberes Rahmenteil 8a und ein parallel dazu verlaufendes unteres Rahmenteil 8b auf, die beide der Kontur des Fronteils 1 angepasst ausgeführt sind. Das obere und das untere Rahmenteil 8a und 8b sind an ihren Enden 9 und 10 gelenkig miteinander verbunden, wodurch ein rechtsseitiger und ein linksseitiger Gelenkpunkt gebildet sind; in der Figur ist nur ein Gelenkpunkt 11 erkennbar. Die Gelenkpunkte 11 liegen in einem gegenüber der Frontseite 4 nach hinten versetzt liegenden Bereich der Straßenbahn 2. Der Rahmen 8 ist mit einer flexiblen Plane 12 versehen, indem die Plane 12 zwischen den Rahmenteilen 8a und 8b aufgespannt ist. Die Plane erstreckt sich dabei von dem einen linksseitigen Gelenkpunkt 11 kommend keilförmig ansteigend zur Frontseite 4 hin, umspannt dort die beiden Rahmenteile 8a und 8b, um dann wieder zu dem anderen rechtsseitigen Gelenkpunkt 11 keilförmig auszulaufen. Das obere Rahmenteil 8a kann auch durch das Fahrzeug selbst ersetzt werden, wenn dieses zur Anbringung der Plane geeignet ausgeführt ist.

Während eines normalen Betriebs der Straßenbahn 2 mit der Frontseite 4 in Fahrtrichtung befindet sich die Bugschürze 6 im heruntergeklappten Zustand und bietet daher einen guten Personenschutz, weil eine verunfallte Person nicht in den Bereich der Kupplung 7 gelangen kann.

Soll die Straßenbahn 2 an eine weitere Straßenbahn - nicht dargestellt - angehängt werden, dann wäre die Bugschürze 6 störend, weil sie den Zugriff auf die Kupplung 7 behindert. Um dem abzuhelfen, kann die Bugschürze 6 von Hand oder mittels einer nicht gezeigten Stelleinrichtung angehoben werden, wobei das untere Rahmenteil 8b nach oben zum Rahmenteil 8a geschwenkt wird.

## Patentansprüche

1. Personenschutzvorrichtung : eines Fahrzeugs (2), wobei das Fahrzeug als Schienenfahrzeug ausgeführt ist, mit einer Bugschürze (6) vor verletzungsgefährdenden Elementen (7) an der Frontseite (4) des Fahrzeugs (2), **dadurch gekennzeichnet, dass** die Bugschürze (6)
die verletzungsgefährdenden Elemente (7) freigebbar aufweist, wobei die Bugschürze (6) einen zweiteiligen, C-förmigen Rahmen (8) mit einer aufgespannten, flexiblen Plane (12) aufweist und ein oberes Rahmenteil (8a) des zweiteiligen Rahmens (8) fest und ein unteres Rahmenteil (8b) des zweiteiligen Rahmens (8) in einem gegenüber der Frontseite (4) nach hinten versetzt liegenden Bereich des Fahrzeugs (1) gelenkig mit dem oberen Rahmenteil (8a) oder mit dem Fahrzeug (1) verbunden ist.

2. Personenschutzvorrichtung nach Anspruch 1,
**dadurch gekennzeichnet, dass**
das obere Rahmenteil (8a) und das untere Rahmenteil (8b) an die Kontur an der Frontseite (4) angepasst sind.

3. Personenschutzvorrichtung nach Anspruch 2,
**dadurch gekennzeichnet, dass**
das obere Rahmenteil (8a) unmittelbar mit dem Frontteil (1) des Fahrzeugs (1) verbunden ist.

4. Personenschutzvorrichtung nach Anspruch 1 oder 2,
**dadurch gekennzeichnet, dass**
das obere Rahmenteil in das Frontteil des Fahrzeugs integriert ist.

5. Personenschutzvorrichtung nach einem der vorangehenden Ansprüche,
**dadurch gekennzeichnet, dass**
zwischen dem oberen und dem unteren Rahmenteil eine federbelastete Spannvorrichtung vorhanden ist.

6. Personenschutzvorrichtung nach einem der vorangehenden Ansprüche,
**dadurch gekennzeichnet, dass**
an dem unteren Rahmenteil eine Stelleinrichtung angreift, mittels der die verletzungsgefährdenden Elemente freigebbar sind.

7. Personenschutzvorrichtung nach einem der vorangehenden Ansprüche,
**dadurch gekennzeichnet, dass**
die Plane (12) kunststofffaserverstärkt ist.

8. Personenschutzvorrichtung nach einem der vorangehenden Ansprüche,
**dadurch gekennzeichnet, dass**
das untere Rahmenteil von unten her mit einer Kunststoffschiene geschützt ist.

9. Personenschutzvorrichtung nach einem der vorangehenden Ansprüche,
**dadurch gekennzeichnet, dass**
die Bugschürze bei einem Schienenfahrzeug an der Frontseite einen unteren Bereich abdeckt, in dem sich eine Kupplung befindet.

## Claims

1. Personal protection apparatus of a vehicle (2), wherein the vehicle is designed as a rail vehicle, with a fairing (6) in front of elements (7) posing a risk of injury on the front side (4) of the vehicle (2), **characterised in that** the fairing (6) has the elements (7) posing a risk of injury in a releasable manner, wherein the fairing (6) has a two-part, C-shaped frame (8) with a stretched, flexible tarpaulin (12), and an upper frame part (8a) of the two-part frame (8) is fixed, and a lower frame part (8b) of the two-part frame (8) in a region of the vehicle (1) set back from the front side (4) is connected to the upper frame part (8a) or to the vehicle (1) in an articulated manner.

2. Personal protection apparatus according to claim 1, **characterised in that**
the upper frame part (8a) and the lower frame part (8b) are adapted to the contour on the front side (4).

3. Personal protection apparatus according to claim 2, **characterised in that**
the upper frame part (8a) is directly connected to the front part (1) of the vehicle (1).

4. Personal protection apparatus according to claim 1 or 2, **characterised in that**
the upper frame part is integrated into the front part of the vehicle.

5. Personal protection apparatus according to one of the preceding claims,
**characterised in that**
a spring-loaded tensioning apparatus is present between the upper and the lower frame part.

6. Personal protection apparatus according to one of the preceding claims,
**characterised in that**
an adjusting device, by means of which the elements posing a risk of injury can be released, engages on the lower frame part.

7. Personal protection apparatus according to one of the preceding claims,
**characterised in that**
the tarpaulin (12) is reinforced with plastic fibres.

8. Personal protection apparatus according to one of the preceding claims,
**characterised in that**
the lower frame part is protected from below by a plastic rail.

9. Personal protection apparatus according to one of the preceding claims,
**characterised in that**,
in a rail vehicle, the fairing covers a lower region in which a coupling is located on the front side.

## Revendications

1. Dispositif de protection des personnes d'un véhicule (2), le véhicule étant réalisé sous la forme d'un véhicule ferroviaire, comprenant une jupe (6) de nez devant des éléments (7) menaçant de blesser du côté (4) avant du véhicule (2), **caractérisé en ce que** la jupe (6) de nez a, avec possibilité de les relâcher, les éléments (7) menaçant de blesser, la jupe (6) de nez, ayant un cadre (8) en deux parties en forme de C, ayant une bâche (12) souple tendue et une partie (8a) supérieure du cadre (8) en deux parties est fixe et une partie (8b) inférieure du cadre (8) en deux parties est, dans une région décalée vers l'arrière par rapport au côté (4) avant, articulée à la partie (8a) supérieure du cadre ou au véhicule (1).

2. Dispositif de protection des personnes suivant la revendication 1,
**caractérisé en ce que**
la partie (8a) supérieure du cadre et la partie (8b) inférieure du cadre sont adaptées au contour du côté (4) avant.

3. Dispositif de protection des personnes suivant la revendication 2,
**caractérisé en ce que**
la partie (8a) supérieure du cadre est reliée directement à la partie (1) avant du véhicule (1).

4. Dispositif de protection des personnes suivant la revendication 1 ou 2,
**caractérisé en ce que**
la partie supérieure du cadre est intégrée à la partie avant du véhicule.

5. Dispositif de protection des personnes suivant l'une des revendications précédentes,
**caractérisé en ce qu'**
un système tendeur soumis à l'action d'un ressort est présent entre la partie supérieure et la partie inférieure du cadre.

6. Dispositif de protection des personnes suivant l'une des revendications précédentes,
**caractérisé en ce qu'**
un dispositif de réglage, au moyen duquel les éléments menaçant de blesser peuvent être relâchés, attaque la partie inférieure du cadre.

7. Dispositif de protection des personnes suivant l'une des revendications précédentes,
**caractérisé en ce que**
la bâche (12) est renforcée par de la fibre en matière plastique.

8. Dispositif de protection des personnes suivant l'une des revendications précédentes,
**caractérisé en ce que**
la partie inférieure du cadre est protégée par le bas par une barre en matière plastique.

9. Dispositif de protection des personnes suivant l'une des revendications précédentes,
**caractérisé en ce que**
la jupe de nez recouvre, dans un véhicule ferroviaire, du côté avant, une région inférieure, dans laquelle se trouve un attelage.
